# FASCICULE DE BREVET EUROPEEN

(11) **EP 2 642 860 B1**
(45) Date de publication et mention de la délivrance du brevet: **04.06.2014**
(21) Numéro de dépôt: 11832107.4
(22) Date de dépôt: 13.10.2011
(51) Int. Cl.: A23B 9/02, A23L 3/16, F26B 3/08, F26B 17/00, A23L 3/20, A23L 1/221

(54) **SYSTÈME CONTINU DE TRAITEMENT POUR LA DÉBACTÉRISATION DE SOLIDES DIVISÉS, NOTAMMENT DE PRODUITS ALIMENTAIRES**
KONTINUIERLICHES BEARBEITUNGSSYSTEM ZUR ENTBAKTERISIERUNG VON GETEILTEN FESTSTOFFEN, INSBESONDERE NAHRUNGSMITTELN
CONTINUOUS TREATMENT SYSTEM FOR THE DEBACTERISATION OF DIVIDED SOLIDS, ESPECIALLY FOOD PRODUCTS

(30) Priorité: 23.11.2010 FR 1059627
(43) Date de publication de la demande: 02.10.2013
(73) Titulaire: FCD, 07800 Beauchastel (FR)
(72) Inventeur: CHEINET, Florent, F-07800 Beauchastel (FR)
(74) Mandataire: Pichat, Thierry
(86) Numéro de dépôt international: PCT/FR2011/052384
(87) Numéro de publication internationale: WO 2012/069720

(56) Documents cités:
- WO-A1-91/09532
- DE-A1- 2 243 670
- US-A- 3 742 614

## Description

La présente invention concerne un système continu de traitement thermique de solides divisés couplé à une réaction solide-gaz ayant pour application principale la décontamination de solides divisés, notamment de produits alimentaires, tels que des herbes, épices, poudres etc.....

A titre d'exemple, à l'heure actuelle la demande de produits alimentaires décontaminés est de plus en plus importante, en témoigne les rappels de produits contaminés à la listéria, et les coûts engendrés sont souvent énormes.

Le cout d'obtention de la qualité est un frein actuel que les réglementations de la communauté Européenne sont en train de remédier en obligeant à des garanties de plus en plus importantes.

Pouvoir proposer des produits « pasteurisés » à défaut de « stériles » ou au moins « décontaminés » est devenu une exigence du marché mondial.

Les ciblés sont : les entéro bactéries type Escherichia Coli, la flore totale, les levures et moisissures.

Dans le procédé de production, les grands acteurs du marché sont pour le moment encore en pays « occidentalisés », ils achètent des herbes et épices produits dans les différents pays du monde, ceux-ci, souvent contaminés, doivent alors être « débactérisés ». En effet les étapes de séchage sont souvent faites à même le sol dans certains pays, pour des raisons économiques.

A l'heure actuelle il y a différentes technologies à disposition sur le marché permettant de décontaminer les produits sous différentes formes.

L'irradiation, les micro-ondes, l'ionisation, l'ozone, les gaz type Oxyde de polypropylène, dépôt de substances d'econtaminantes, en bref toutes les solutions hors vapeur d'eau ne sont pas des solutions ayant un futur, pour le moment, car elles doivent faire l'objet d'un marquage spécifique sur l'emballage final ce qui est un réel frein au marketing (un produit décontaminé par irradiation a plus de mal à se vendre).

Les autres systèmes utilisant de la vapeur se différencient en deux sous catégories :
- les systèmes « batch » type autoclave : des lots sont traités unitairement, ce qui permet une traçabilité parfaite mais contraint à des coûts de main d'oeuvre élevés. Ces systèmes sont très utilisés dans l'industrie pharmaceutique.
- Les systèmes continus.

Les paramètres fondamentaux dans la décontamination par la vapeur sont:
- La température produit
- Le mode de transport du produit
- La température de la vapeur
- Le temps de passage du produit
- La quantité de vapeur utilisée

En effet un temps de passage de quelques secondes à haute température peut avoir le même effet qu'un temps de 3 minutes à plus basse température. Mais le produit peut être altéré par la température, la quantité de vapeur utilisée va enlever du produit des huiles essentielles et des aromes, ce qui altère la qualité du produit final tant en couleur qu'en goût.

Le mode de transport des solides divisés et le mode de traitement et chauffage influent grandement sur le coût de l'installation, la qualité du traitement et la qualité du produit final.

Le compromis entre ce que le client peut accepter comme couleur, goût, et niveau de contamination ramené au coût du traitement donne le compromis technico économique à trouver.

Il faut décontaminer le plus possible, de manière à atteindre des taux de contamination acceptable, sans dégrader ni détruire les caractéristiques organoleptiques des produits, avoir une altération des produits en couleur et goût la plus petite possible ; utiliser un mode de chauffage le plus économique et un mode de transport qui permette de répondre à tous ces impératifs.

Une unité de décontamination en continu est composée d'une alimentation de produit, une unité débactérisation, une unité de séchage refroidissement et une unité de conditionnement.

Le système d'alimentation du produit est souvent une option que les utilisateurs choisissent parfois.

La partie débactérisation par la vapeur nécessite bien entendu de la vapeur. Une chaudière pour produire cette vapeur est une option que peu d'utilisateurs choisissent, en effet les industriels de l'agro alimentaire sont généralement équipés de vapeur dans leurs usines. Toutefois il faut être très vigilant sur le fait qu'une unité nécessite de la vapeur régulée et souvent aussi surchauffée entre 100 et 140°C. Cela implique une option avec un surchauffeur.

Il faut aussi ensuite prévoir la partie extraction de la vapeur jusqu'à l'extérieur. Celle-ci servira généralement aussi d'extraction pour l'air froid et sec utilisé dans la partie refroidissement ce qui réduit les soucis de condensation.

Les clients ont souvent dans leurs usines des systèmes d'extraction proches ou se raccorder.

Lorsque le produit sort de l'unité de débactérisation il est chaud et humide. Afin qu'il ne se recontamine pas immédiatement à l'air il est impératif de le sécher et refroidir.

Le produit est alors amené dans l'unité de séchage - refroidissement.

C'est pourquoi avoir de l'air froid, sec et filtré (non contaminé) est nécessaire et souvent les utilisateurs en sont équipés. Ces installations sont très couteuses et impactent grandement le coût de l'installation.

Le coût dépend largement de la demande de l'utilisateur : quelle température de produit par rapport à la température extérieure peut il accepter en sortie de refroidissement, sachant que les derniers 5°C sont les plus difficiles à obtenir et que l'écart par rapport aux conditions ambiantes est souvent important (en Malaisie il fait 30°C et 95% d'humidité, en Grèce 35°C et très sec. Les impératifs sont différents).

Lorsque le produit est sec, débactérisé et à une température qui permet son conditionnement sans recontamination immédiate il est stocké ou conditionné. Un système d'ensachage « big bag », simple et peu couteux est une option communément proposée.

Les principaux systèmes connus sur le marché consistent à créer:
un lit fluidisé (transport par vibrations) déplaçant les particules sur une plaque métallique percée d'une multitude de trous et la vapeur sert à chauffer les particules et les débactériser.
- Avantages : grande homogénéité du traitement et possibilité de traiter toutes les tailles de particules mais prix de l'installation très cher et beaucoup de vapeur qui dégrade fortement les produits.
   Est également connu un système qui consiste à utiliser un tube inox enroulé en spirale autour d'une tour chauffé par effet Joule, cette tour étant soumise à une vibration qui permet de faire monter le produit. De la vapeur est injectée d'un coté des spires et extraite de l'autre.
- Avantages : environ 10 fois moins de vapeur nécessaire que précédemment car les particules sont chauffées par contact sur le tube, la vapeur ne sert qu'à débactériser. Mais l'inconvénient réside dans le prix très élevé pour des petites capacités car cela fait appel à de l'électrique de puissance, les poudres ne sont pas suffisamment décontaminées, collages en entrée et sortie c'est-à-dire dans les zones froides, et le lit vibro-fluidisé du tube ne garantit pas une homogénéité du traitement.
   Un troisième système connu consiste à utiliser une vis sans fin dans une auge, tous deux chauffés par effet Joule, la vis fait avancer le produit. De la vapeur est injectée tout au long de l'auge, afin de décontaminer le produit.
- Avantages : environ 10 fois moins de vapeur que dans le premier cas car les particules sont chauffées par contact avec la vis et l'auge, mais le prix de l'installation est fortement grevé par l'électrique de puissance. Le jeu entre l'auge et la vis laisse un lit de produit non traité ce qui limite l'efficacité du traitement en ne garantissant pas son homogénéité.

L'étude des systèmes concurrents montre qu'il ne faut pas utiliser l'électrique de puissance qui contraint à utiliser des transformateurs électriques chers.

Le système de transport ne doit pas se faire par une vis car il ne garantit pas une homogénéité de traitement.

La tour vibrante est trop chère pour être aussi utilisée.

Les particules doivent être chauffées (avant débactérisation) autrement que par la vapeur car sinon on dégrade les produits.

En fait :
- Le transport doit être fait par un lit fluidisé « aménagé »

La vapeur doit être surchauffée afin de décontaminer plus rapidement

Le chauffage du lit fluidisé sera fait par des résistances électriques du commerce.

Le système doit permettre de traiter toutes les granulométries y compris les poudres.

Dans ce but et pour remédier aux inconvénients des systèmes existants, la présente invention concerne un système continu de traitement thermique de solides divisés, couplé à une réaction gaz - solide pour la débactérisation notamment de produits alimentaires, tel que des herbes, épices, poudres etc...., du type constitué par :
- une unité d'alimentation du produit,
- une unité de débactérisation constitué par un lit fluidisé déplaçant les particules par vibration, associé à un apport de vapeur ou autre gaz,
- une unité de séchage refroidissement,
- une unité de conditionnement,
caractérisé en ce que l'unité de débactérisation (3) comprend une sole en escalier (5) apte à permettre le transport du produit (6) s'effectuant successivement selon une première phase de transport (H) globalement à l'horizontale, vibro-fluidisée, et au moins une seconde phase de transport verticale (V), ces phases (H, V) en escalier, étant obtenues à partir d'une marche (7) globalement horizontale et pleine formant la sole (5) assurant la première phase (H), alors qu'une contremarche (8) verticale, assure la deuxième phase (V), ladite contremarche (8) ou le nez (9) de marche (7) présentant une rampe (10) d'injection de vapeur surchauffée ou autre gaz, agissant en décontamination sur le produit (6) lors de son passage de la phase horizontale (H) à la phase verticale (V) et à la phase horizontale (H) suivante.

L'invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels:
- la figure 1 représente schématiquement et en perspective un système continu de décontamination intégrant une unité de débactérisation selon l'invention ;
- la figure 2 représente en perspective une unité de débactérisation selon la figure 1, sans carter de protection pour une meilleure compréhension de l'invention ;

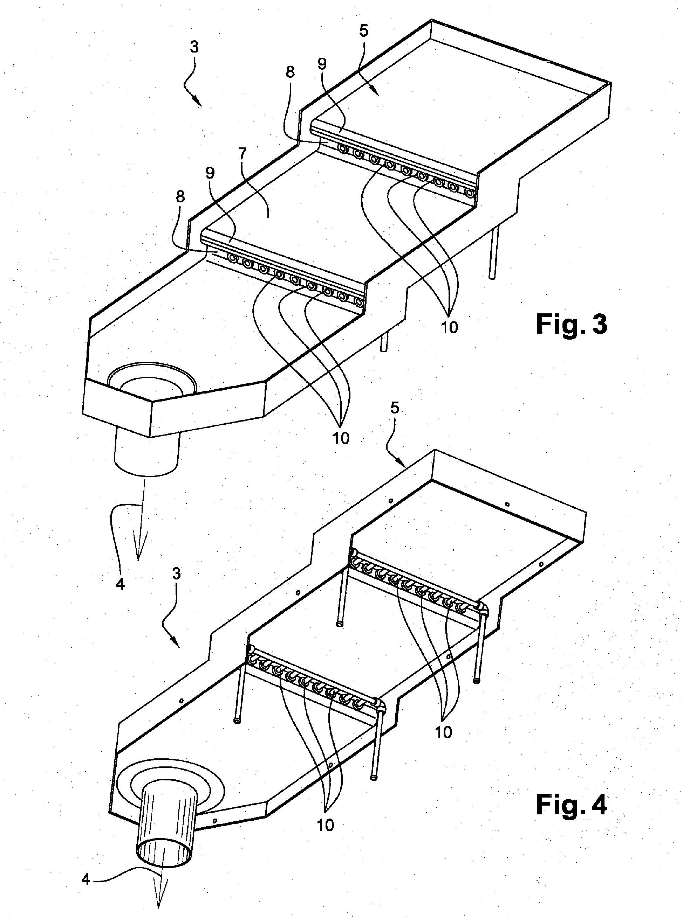

- les figures 3 et 4 représentent en perspective une sole seule, constitutive de l'unité de débactérisation respectivement en vue de dessus et de dessous ;
- la figure 5 représente en perspective la sole en vue de dessous selon la figure 4, mais montrant un circuit électrique de chauffage intégré.

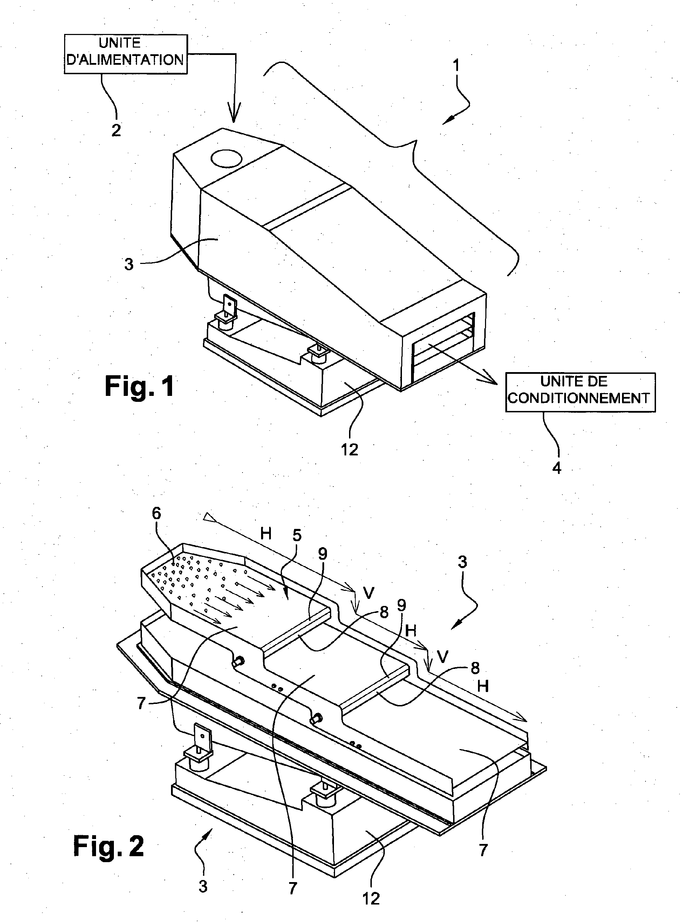

Le système de décontamination 1, globalement désigné sur la figure 1 comprend de manière connue :
- une unité d'alimentation 2 du produit ;
- une unité de débactérisation 3 constitué par un lit fluidisé déplaçant les particules par vibration, associé à un apport de vapeur ou autre gaz ;
- une unité de séchage refroidissement,
- une unité de conditionnement 4

Selon l'invention l'unité de débactérisation 3 comprend une sole en escalier 5 apte à permettre le transport du produit 6 s'effectuant successivement selon une première phase de transport H globalement à l'horizontale, vibro-fluidisée, et au moins une seconde phase de transport verticale V, ces phases H, V en escalier étant obtenues, à partir d'une marche 7 globalement horizontale et pleine, formant la sole 5 assurant la première phase H, alors qu'une contremarche 8 verticale, assure la deuxième phase V, ladite contremarche 8 ou le nez 9 de marche 7 présentant une rampe 10 d'injection de vapeur surchauffée ou autre gaz, agissant en décontamination sur le produit 6 lors de son passage de phase horizontale H à la phase verticale V et à la phase horizontale H suivante.

La réaction solide - gaz est initiée dans la première phase verticale sur le produit déjà chauffé. Cette phase verticale assure une homogénéité de traitement sur 100% des particules. La réaction continue avec la phase horizontale suivante puisque le lit vibro- fluidisé continue de réagir avec la phase gazeuse. Le processus est continu et dure sur toute la longueur de l'unité de débactérisation. Dans le cas spécifique de la débactérisation le gaz utilisé sera de la vapeur d'eau (généralement surchauffée).

La sole 5 en escalier comporte au moins deux marches 7 et une contre marche 8, mais bien entendu cela n'est pas limité et peut varier selon la nature et la quantité de produit 6 à traiter, c'est ainsi qu'à titre d'exemple de réalisation la sole représentée sur les figures comprennent trois marches 7 et deux contremarches 8.

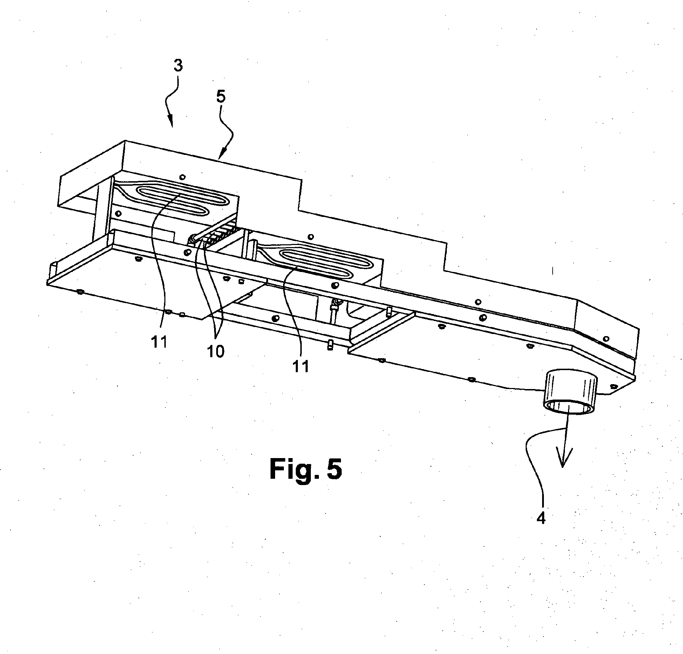

Selon une autre caractéristique de l'invention (voir figure 5) la sole 5 comporte sous la face inférieure de ses marches pleines 7, des résistances électriques 11, aptes à chauffer préalablement par contact, le produit 6 avant le passage devant la rampe d'injection 10 de vapeur ou autre gaz, de la contremarche 8 ou le nez de marche 9. Ce chauffage préalable permet d'éviter des risques de condensation de vapeur (ou autre gaz) et limite la quantité de vapeur (ou autre gaz) à utiliser.

Les marches 7 de la sole 5 en escalier peuvent être inclinées jusqu'à plus ou moins 30° par rapport à l'horizontale.

Les essais et le savoir faire détermineront la longueur des marches 7, la hauteur des contremarches 8, la forme du nez de marche 9, le nombre de marches 7, le nombre de points de vapeur d'injection 10, la nature des buses d'injection, qui sont fonction des produits à stériliser.

Les vibrations de la sole 5 sont obtenues par l'intermédiaire d'un moteur vibrant électromagnétique 12, un moteur à balourd, ou une boite à balourds selon les produits.

Les avantages d'une unité de décontamination selon l'invention résident tout d'abord dans le prix de réalisation faible, un autre avantage est la garantie de l'homogénéité du traitement, car la phase verticale est la garantie que toutes les particules de produits passent dans le flux de vapeur ou gaz, de la rampe d'injection 10, alors qu'elles sont en suspension et donc sans contact avec la sole, le brassage est ainsi garantit.

En fait le système selon l'invention permet de traiter thermiquement des solides divisés, c'est-à-dire permettant de traiter les particules de deux micron à plusieurs centimètres. Il permet de faire réagir des solides divisés avec un gaz. C'est un avantage majeur qui est le garant d'une très grande polyvalence très recherchée par les utilisateurs qui traitent plusieurs produits, de différentes tailles, densités...

La grande simplicité du système procure également l'avantage de rendre son entretien facile et rapide, en excluant toute utilisation de consommables.

A noter également :
- La taille de l'installation est à ajuster en fonction de la capacité demandée pour la largeur et du temps de passage pour la longueur, mais une longueur de 6 à 8 m semble d'ores et déjà être requise pour un temps de passage de 3 minutes et 30 secondes qui est un standard dans la profession.
- L'énergie électrique pour les résistances afin de chauffer la sole par le dessous est nécessaire, ce qui est un frein dans des pays ou le courant n'est pas stable, une solution avec une double enveloppe à bain d'huile pourrait être envisagée, mais serait risquée sur des systèmes vibrants.

## Revendications

1. Système continu de traitement thermique de solides divisés, couplé à une réaction gaz - solide pour la débactérisation notamment de produits alimentaire, tel que des herbes, épices, poudres etc...., du type constitué par :
- une unité d'alimentation (2) du produit,
- une unité de débactérisation (3) constitué par un lit fluidisé déplaçant les particules par vibration, associé à un apport de vapeur ou autre gaz,
- une unité de séchage refroidissement,
- une unité de conditionnement (4),
**caractérisé en ce que** l'unité de débactérisation (3) comprend une sole en escalier (5) apte à permettre le transport du produit (6) s'effectuant successivement selon une première phase de transport (H) globalement à l'horizontale, vibro-fluidisée, et au moins une seconde phase de transport verticale (V), ces phases (H, V) en escalier, étant obtenues à partir d'une marche (7) globalement horizontale et pleine formant la sole (5) assurant la première phase (H), alors qu'une contremarche (8) verticale, assure la deuxième phase (V), ladite contremarche (8) ou le nez (9) de marche (7) présentant une rampe (10) d'injection de vapeur surchauffée ou autre gaz, agissant en décontamination sur le produit (6) lors de son passage de la phase horizontale (H) à la phase verticale (V) et à la phase horizontale (H) suivante.

2. Système selon la revendication 1 **caractérisé en ce que** la sole (5) en escalier comporte au moins deux marches (7) et une contremarche (8).

3. Système selon la revendication 1 ou 2 **caractérisé en ce que** la sole (5) comporte sous la face inférieure de ses marches pleines (7), des résistances électriques (11), aptes à chauffer préalablement par contact, le produit (6) avant le passage devant la rampe d'injection (10) de vapeur ou autre gaz, de la contremarche (8) ou le nez de marche (9).

4. Système selon l'une des revendications 1 à 3 **caractérisé en ce que** les marches (7) de la sole (5) en escalier sont inclinées de plus ou moins 30° par rapport à l'horizontale.

## Patentansprüche

1. Kontinuierliches System für die thermische Bearbeitung von geteilten Feststoffen, gekoppelt mit einer Gas-Feststoff-Reaktion für die Entbakterisierung vor allem von Nahrungsmitteln, wie Kräuter, Gewürze, Pulver usw., des Typs, das gebildet wird von:
- einer Produktversorgungseinheit (2),
- einer Entbakterisierungseinheit (3), die aus einem fluidisierten Bett besteht, das die Partikel durch Vibration verlagert, kombiniert mit einer Zufuhr von Dampf oder eines anderen Gases,
- einer Kühl-Trocknungs-Einheit,
- einer Verpackungseinheit (4),
**dadurch gekennzeichnet, dass** die Entbakterisierungseinheit (3) eine treppenförmige Sohle (5) umfasst, die imstande ist, den Transport des Produkts (6) zu erlauben, der schrittweise gemäß einer ersten allgemein horizontalen vibrierend-fluidisierten Transportphase (H) und mindestens einer zweiten vertikalen Transportphase (V) erfolgt, wobei diese treppenförmigen Phasen (H, V) ab einer allgemein horizontalen und vollen Stufe (7), die die Sohle (5) bildet, die die erste Phase (H) sichert, erhalten werden, wogegen eine vertikale Steigung (8) die zweite Phase (V) sichert, wobei die Steigung (8) oder die Nase (9) der Stufe (7) eine Injektionsrampe (10) für Heißdampf oder ein anderes Gas aufweist, das auf das Produkt (6) bei seinem Übergang von der horizontalen Phase (H) zur vertikalen Phase (V) und zur nächsten horizontalen Phase (H) dekontaminierend wirkt.

2. System nach Anspruch 1, **dadurch gekennzeichnet, dass** die treppenförmige Sohle (5) mindestens zwei Stufen (7) und eine Steigung (8) aufweist.

3. System nach Anspruch 1 oder 2, **dadurch gekennzeichnet, dass** die Sohle (5) unter der Unterseite ihrer vollen Stufen (7) elektrische Widerstände (11) aufweist, die imstande sind, das Produkt (6) vor dem Durchgang vor der Injektionsrampe (10) für Dampf oder ein anderes Gas, der Steigung (8) oder der Stufennase (9) durch Kontakt zu erwärmen.

4. System nach einem der Ansprüche 1 bis 3, **dadurch gekennzeichnet, dass** die Stufen (7) der treppenförmigen Sohle (5) um mehr oder weniger als 30° im Verhältnis zur Horizontalen geneigt sind.

## Claims

1. A continuous heat treatment system for divided solids, coupled with a gas-solid reaction, for debacterization of notably food products, such as herbs, spices, powders, etc...., of the type formed by:
- a unit (2) for supplying the product,
- a debacterization unit (3) formed by a fluidized bed displacing the particles by vibration, associated with a supply of steam or of another gas,
- a drying/cooling unit,
- a conditioning unit (4),
**characterized in that** the debacterization unit (3) comprises a stair-shaped floor (5) capable of allowing transport of the product (6) successively being carried out according to a first vibro-fluidized globally horizontal transport phase (H), and at least one second vertical transport phase (V), these stair-shaped phases (H, V) being obtained from a globally horizontal and solid step (7) forming the floor (5) ensuring the first phase (H), while a vertical counter-step (8) ensures the second phase (V), said counter-step (8) or the step (7) nose (9) having a ramp (10) for injecting overheated steam or another gas, acting as decontamination on the product (6) during its passing from the horizontal phase (H) to the vertical phase (V) and to the following horizontal phase (H).

2. The system according to claim 1, **characterized in that** the stair-shaped floor (5) includes at least two steps (7) and a counter-step (8).

3. The system according to claim 1 or 2, **characterized in that** the floor (5) includes under the lower face of its solid steps (7), electric resistors (11) capable of preliminary heating by contact, the product (6) before the passing in front of the ramp (10) for injecting steam or another gas of the counter-step (8) or the step nose (9).

4. The system according to one of claims 1 to 3, **characterized in that** the steps (7) of the stair-shaped floor (5) are tilted by more or less 30° relatively to the horizontal.
